# EUROPÄISCHE PATENTSCHRIFT

(11) **EP 1 361 973 B1**
(45) Veröffentlichungstag und Bekanntmachung des Hinweises auf die Patenterteilung: **15.09.2004**
(21) Anmeldenummer: 02719894.4
(22) Anmeldetag: 21.02.2002
(51) Int. Cl.: B60T 11/16, B60T 11/236

(54) **HAUPTZYLINDER**
MASTER CYLINDER
MAITRE-CYLINDRE

(30) Priorität: 23.02.2001 DE 10108775
(43) Veröffentlichungstag der Anmeldung: 19.11.2003
(73) Patentinhaber: Lucas Automotive GmbH, 56070 Koblenz (DE)
(72) Erfinder: COHEN, Rudolf, 56070 Kesselheim (DE); GOERLITZ, Frank, 56218 Mülheim-Kärlich (DE); GONZALO, Leopoldo, Palacios, E-31011 Pamplona (Navarra) (ES); MÜNZ, Christoph, 56170 Bendorf (DE)
(74) Vertreter: Beyer, Andreas, Dr.
(86) Internationale Anmeldenummer: PCT/EP2002/001854
(87) Internationale Veröffentlichungsnummer: WO 2002/068251

(56) Entgegenhaltungen:
- DE-A- 4 225 556
- DE-A- 19 505 115
- DE-C- 19 610 834
- US-A- 4 242 869
- US-A- 4 531 452
- US-A- 4 532 856

## Beschreibung

Die Erfindung betrifft einen Hauptzylinder, oft auch Hauptbremszylinder genannt, für eine hydraulische Fahrzeugbremsanlage mit einem Gehäuse, das eine sich entlang einer Längsachse erstreckende Bohrung aufweist, deren eines Ende von einer zum Gehäuse des Hauptzylinders gehörenden Stirnwand und deren anderes, gegenüberliegendes Ende durch ein Verschlußelement abdichtend verschlossen ist, einem in der Bohrung geführten Kolben, der abdichtend und axial verschiebbar durch das Verschlußelement hindurchgeführt ist, und einem am Kolben ausgebildeten Zentralventil, das eine Fluidverbindung zwischen einem Fluidreservoir und einer in der Bohrung durch die Stirnwand und den Kolben begrenzten Druckkammer ermöglicht, und das bei unbetätigtem Kolben durch ein an einem Anschlagelement anliegendes Anlagebauteil in Offenstellung gehalten ist, wobei das Verschlußelement aus zwei lösbar miteinander verbundenen, kreisringförmigen, sich axial aneinander anschließenden Teilen gebildet ist, von denen das erste, der Bohrung zugewandte Teil aus einem Elastomermaterial und das zweite, von der Bohrung abgewandte Teil aus einem starren Material besteht. Ein solcher Hauptzylinder ist aus der DE 196 10 834 C1 und der DE 195 05115 A1 bekannt.

Hauptzylinder dieser Art werden in Fahrzeugen vor allem zusammen mit Bremsdruckregelsystemen verwendet, wobei diese Bremsdruckregelsysteme heutzutage häufig die Funktion haben, sowohl ein Blockieren der Fahrzeugräder beim Bremsen (sogenanntes Antiblockiersystem), als auch ein Durchdrehen der Antriebsräder beim Beschleunigen, insbesondere auf rutschigem Untergrund zu verhindern (sogenannte Antriebsschlupfregelung).

Das in dem Kolben angeordnete Zentralventil wird im unbetätigten Zustand des Hauptzylinders, d.h. wenn sich der Kolben in seiner Ruhe- bzw. Ausgangsstellung befindet, durch ein mit dem Zentralventil verbundenes Anlagebauteil offengehalten, welches sich direkt oder indirekt an der ihm zugewandten Stirnfläche des zum Verschlußelement gehörenden Teils aus Elastomermaterial abstützt. Bei einer Betätigung des Hauptzylinders wird der Kolben mit dem Zentralventil in Betätigungsrichtung verschoben, wobei sich das Anlagebauteil von der Stirnfläche des Verschlußelements löst und das Zentralventil geschlossen wird. Wenn sich der Kolben nach der Betätigung des Hauptzylinders in seine Ausgangsstellung zurückbewegt, legt sich das mit ihm verbundene Anlagebauteil weich und gedämpft an das Elastomerteil des Verschlußelements an und das Zentralventil wird wieder geöffnet.

Das Elastomerteil und das aus einem starren Material bestehende Teil des Verschlußelements sind lösbar miteinander verbunden, wobei das Teil aus starrem Material einen ringförmig umlaufenden Vorsprung aufweist, der das Elastomerteil axial vollständig oder nahezu vollständig durchsetzt. Dadurch kommt das Anlagebauteil bei einer Rückbewegung des Kolbens in seine Ausgangsstellung unmittelbar nach dem weichen Anlegen an dem Elastomerteil mit dem starren Anschlag des ringförmig umlaufenden Vorsprungs in Berührung, so daß unabhängig von dem in der Druckkammer des Hauptzylinders vorherrschenden Druck ein klar definiertes Öffnungsverhalten des Zentralventils gewährleistet ist.

Zur Befestigung des Verschlußelements in der im Gehäuse des Hauptzylinders ausgebildeten Bohrung, befindet sich auf der der Bohrung zugewandten Seite des Verschlußelements eine Anschlagplatte, die mit dem Elastomerteil angeordnet ist und durch Anschlag an einen Gehäusevorsprung in der Bohrung fixiert ist. Auf der von der Bohrung abgewandten Seite befindet sich gemäss DE 19610834 C ein Sprengring, der mit dem aus starrem Material bestehenden Teil des Verschlußelements in Berührung steht und in einer am Innenumfang der Bohrung ausgebildeten Nut verrastet ist.

Gemäss DE 19505115 A1 befindet sich auf der von der Bohrung abgewandte Seite der Anschlagscheibe ein Sicherungsring, der in einer am Innenumfang der Bohrung ausgebildeten Nut verrastet ist.

Der vorliegenden Erfindung liegt die Aufgabe zugrunde, einen Hauptzylinder mit einem Verschlußelement bereitzustellen, das einfacher und schneller und dennoch sicher zu montieren ist.

Diese Aufgabe ist ausgehend von dem eingangs genannten Stand der Technik erfindungsgemäß dadurch gelöst, daß das von der Bohrung abgewandte Teil des Verschlußelements mindestens zwei federnd nachgiebige Rastarme aufweist, die mit einer an dem Gehäuse des Hauptzylinders ausgebildeten Rastnut zusammenwirken. Diese Anordnung ermöglicht es, das komplette Verschlußelement in einfachster Art und Weise zu montieren. Bei der Positionierung des Verschlußelements tritt eine elastische Verformung der federnd nachgiebigen Rastarme auf und die daraus resultierenden Rückstellkräfte gewährleisten ein sicheres Verrasten der Rastarme in der am Gehäuse des Hauptzylinders ausgebildeten Rastnut, sobald sich das Verschlußelement in seiner vorbestimmten Position befindet.

Vorzugsweise sind die Rastarme einstückig mit dem aus starrem Material bestehenden, von der Bohrung abgewandten Teil des Verschlußelements ausgebildet. Das Bauteil kann dann einfach und kostengünstig hergestellt werden, beispielsweise als Kunststoffspritzgußteil.

Die Ausbildung der Rastarme an dem von der Bohrung abgewandten Teil des Verschlußelements kann auf verschiedene Weise erfolgen. Gemäß einer Ausführungsform der vorliegenden Erfindung weist jeder Rastarm einen sich in axialer und der Bohrung zugewandter Richtung entlang des Außenumfangs des Gehäuses erstreckenden ersten Abschnitt und einen von dem ersten Abschnitt radial nach innen ragenden Rastabschnitt auf. Der Rastabschnitt wirkt mit einer am Außenumfang des Gehäuses ausgebildeten Rastnut zusammen. Diese Ausgestaltung des erfindungsgemäßen Hauptzylinders ermöglicht eine besonders zuverlässige Montage des Verschlußelements, da eine einfache Sichtkontrolle des Verrastens der Rastabschnitte in der Rastnut möglich ist.

Bei einer bevorzugten Weiterbildung der Erfindung sind die Rastarme an einer außerhalb der Bohrung angeordneten, kreisringförmigen Trägerscheibe des Verschlußelements angeformt. Diese Trägerscheibe ist insbesondere einstückig mit dem von der Bohrung abgewandten Teil aus starrem Material verbunden. Bei dieser Anordnung kann das Verschlußelement in besonders einfacher und zeitsparender Weise direkt auf das Hauptzylindergehäuse aufgeschoben werden, bis die Rastarme in der Rastnut verrasten.

Gemäß einer weiteren bevorzugten Ausführungsform des erfindungsgemäßen Hauptzylinders ist jeder Rastarm im Inneren der Bohrung angeordnet und weist einen sich in axialer und von der Bohrung abgewandter Richtung erstreckenden ersten Abschnitt und einen von dem ersten Abschnitt radial nach außen ragenden Rastabschnitt auf. Der Rastabschnitt wirkt mit einer am Innenumfang der Bohrung ausgebildeten Rastnut zusammen. Die Anordnung der Rastarme im Inneren der Bohrung vermindert die Gefahr einer Beschädigung des montierten Verschlußelements insbesondere während der Lagerung und des Transportes.

In einer Weiterbildung dieser Ausführungsform ist der erste Abschnitt aller Rastarme von einem hohlzylindrischen Wandabschnitt gebildet, der sich von einer Basis des von der Bohrung abgewandten Teils des Verschlußelements in axialer und von der Bohrung abgewandter Richtung erstreckt. Beim Einbau des Verschlußelements verformt sich dann der hohlzylindrische Wandabschnitt elastisch und baut die Rückstellkräfte auf, die die Rastabschnitte in die Rastnut einrasten lassen.

Gemäß einer weiteren Ausführungsform der vorliegenden Erfindung sind die Rastarme an einem hohlzylindrischen Fortsatz angeformt, der auf einem Betätigungsfortsatz des Kolbens geführt ist.

Zwei Ausführungsbeispiele eines erfindungsgemäßen Hauptzylinders werden im folgenden anhand der beigefügten schematischen Figuren näher erläutert. Es zeigt:
- Fig. 1: einen im Längsschnitt dargestellten Endabschnitt eines Ausführungsbeispiels des erfindungsgemäßen Hauptzylinders, und
- Fig. 2: einen im Längsschnitt dargestellten Endabschnitt eines weiteren Ausführungsbeispiels des erfindungsgemäßen Hauptzylinders.

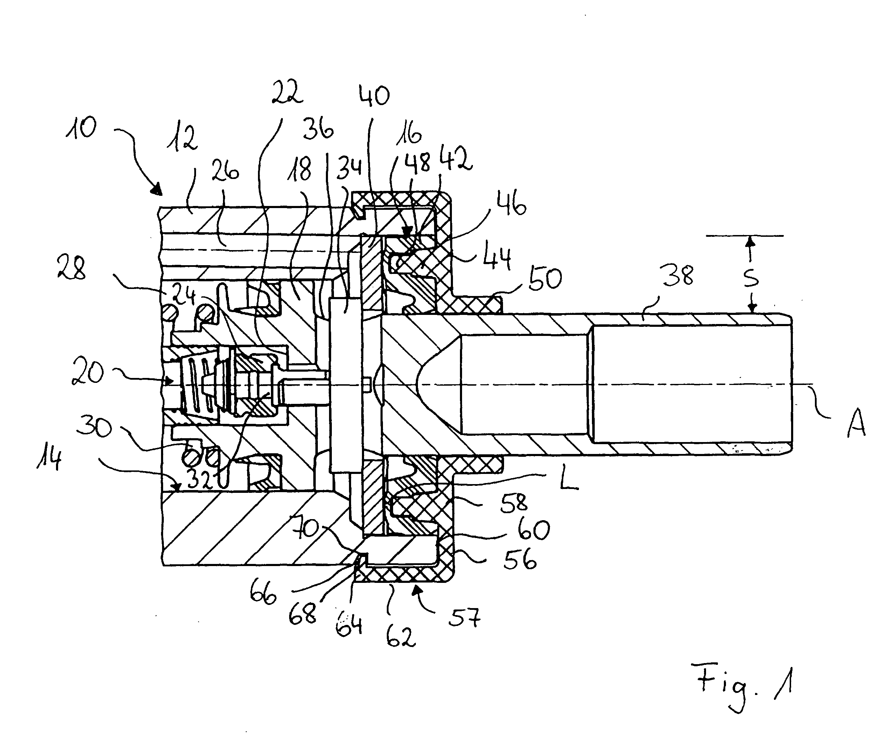

Figur 1 zeigt das krafteingangsseitige Ende einer ersten Ausführungsform des erfindungsgemäßen Hauptzylinders 10 für eine hydraulische Fahrzeugbremsanlage. Der Hauptzylinder 10 hat ein langgestrecktes Gehäuse 12 mit einer entlang einer Längsachse A verlaufenden Bohrung 14. Das hier nicht dargestellte, eine Ende dieser Bohrung 14 ist üblicherweise von einer zum Gehäuse 12 des Hauptzylinders 10 gehörenden Stirnwand dicht verschlossen. Das diesem Ende gegenüberliegende, andere Ende der Bohrung 14 ist wie dargestellt mit einem Verschlußelement 16 abdichtend verschlossen.

In der Bohrung 14 ist benachbart zu dem Verschlußelement 16 ein Kolben 18 abdichtend und axial verschiebbar aufgenommen. In dem Kolben 18 ist ein Zentralventil 20 mit einem Ventilsitz 22 und einem federnd in Richtung auf den Ventilsitz 22 vorgespannten, axial beweglichen Ventilkörper 24 angeordnet. Das Zentralventil 20 gibt im dargestellten, geöffneten Zustand über eine Nachlaufbohrung 26 eine Fluidverbindung zwischen einem nicht gezeigten, mit der Nachlaufbohrung 26 in Verbindung stehenden Fluidreservoir und einer Druckkammer 28 frei, die in der Bohrung 14 zwischen dem Kolben 18 und dem nicht dargestellten, verschlossenen einen Ende der Bohrung 14 begrenzt ist. Der Kolben 18 ist in der Figur in seiner Ruhe- oder Ausgangsstellung wiedergegeben, die er im unbetätigten Zustand einnimmt und in die er in üblicher Weise durch eine Rückstellfeder 30 vorgespannt wird. Die nicht dargestellten Teile des Hauptzylinders 10 sind von üblicher, bekannter Bauart und werden daher nicht näher erläutert. Neben dem gezeigten Kolben 18 kann sich im nicht dargestellten Teil des Hauptzylinders 10 ein ähnlich aufgebauter, zweiter Kolben befinden, der dann als Sekundärkolben bezeichnet wird.

Der Ventilkörper 24 des Zentralventils 20 hat einen sich durch den Kolben 18 hindurch erstreckenden, stiftförmigen Fortsatz 32, an dessen freiem Ende ein als Anschlagbauteil dienender Querstift 34 befestigt ist. Der Querstift 34 ist in einer radialen Durchgangsausnehmung 36 eines einstückig mit dem Kolben 18 verbundenen Betätigungsfortsatzes 38 verringerten Durchmessers aufgenommen, der sich durch das Verschlußelement 16 hindurch erstreckt, aus dem Gehäuse 12 des Hauptzylinders 10 herausragt und zur Verbindung mit einem nicht dargestellten, stangenförmigen Eingangsglied vorgesehen ist. Der Querstift 34 liegt dann, wenn der Kolben 18 die dargestellte Ruhestellung einnimmt, an einer Anschlagringscheibe 40 an, die ihrerseits mit der Stirnfläche eines zum Verschlußelement 16 gehörenden Elastomerteils 42 in Berührung steht, so daß das Zentralventil 20 in Offenstellung gehalten ist.

Das Verschlußelement 16 weist ferner ein sich axial an das kreisringförmig ausgebildete Elastomerteil 42 anschließendes, ebenfalls kreisringförmig ausgebildetes, separates Teil 44 aus starrem Material auf, beispielsweise aus einem geeigneten, harten Kunststoff. Auf seiner dem Elastomerteil 42 zugewandten Stirnfläche weist das Teil 44 aus starrem Material einen ringförmig umlaufenden, sich axial erstreckenden Vorsprung 46 auf, der sich im gezeigten Beispiel zu seinem freien Ende hin konisch verjüngt und dessen freies Ende von einer Reihe stiftförmiger Fortsätze 48 gebildet ist, die in Umfangsrichtung voneinander gleichmäßig beabstandet sind und die sich ebenfalls axial erstrecken. Wie aus der Figur ersichtlich, ist die Axialerstreckung des Vorsprungs 46 (einschließlich seiner Fortsätze 48) so gewählt, daß das Elastomerteil 42 von dem Vorsprung 46 axial nahezu vollständig durchsetzt ist. Zwischen der mit der Anschlagringscheibe 40 in Berührung stehenden Stirnfläche des Elastomerteils 42 und der stirnseitigen Oberfläche jedes der stiftförmigen Fortsätze 48 besteht lediglich der mit L bezeichnete Freiraum. Die größte Querschnittsabmessung des Vorsprungs 46, die sich beim gezeigten Ausführungsbeispiel aufgrund der konischen Ausgestaltung des Vorsprungs 46 an dessen Basis findet, beträgt weniger als die Hälfte der Querschnittsabmessung S des Elastomerteils 42. Zur besseren Führung des Betätigungsfortsatzes 38 weist das Teil 44 des Verschlußelements 16 einen einstückig angeformten, hohlzylindrischen Fortsatz 50 auf. Die aufgrund der separaten Ausbildung kostengünstig getrennt herstellbaren Teile 42 und 44 des Verschlußelements 16 sind durch Zusammenfügen lösbar miteinander verbunden.

Bei dem in der Figur 1 dargestellten Ausführungsbeispiel weist das Teil 44 des Verschlußelements 16 einstückig an eine kreisringförmige Trägerscheibe 56 angeformte Rastarme 57 auf. Die Trägerscheibe 56 ist einstückig an eine Basis 58 des Teils 44 angeformt und vollständig außerhalb der Bohrung 14 in Anlage an eine kreisringförmige Stirnfläche 60 der Gehäusewand 12 angeordnet. Die Rastarme 57 sind jeweils von einem ersten Abschnitt 62, der sich in axialer Richtung entlang des Außenumfangs des Gehäuses 12 erstreckt, und einem Rastabschnitt 64 gebildet. Der Rastabschnitt 64 ragt von dem ersten Abschnitt 62 radial nach innen und wirkt mit einer Rastnut 66 zusammen, die am Außenumfang des Hauptzylindergehäuses 12 ausgebildet ist. Auf ihrer der Bohrung 14 zugewandten Seite weisen der Rastabschnitt 64 und die Rastnut 66 jeweils Abschrägungen 68, 70 auf.

Bei der Montage des Teils 44 wirken die Abschrägungen 68 der Rastabschnitte 64 mit der Stirnfläche 60 der Gehäusewand 12 so zusammen, daß beim Aufschieben des Bauteils 44 auf das Hauptzylindergehäuse 12 die ersten Abschnitte 62 der Rastarme 57 zunehmend elastisch radial nach außen verformt werden. Nach einer genügenden Verformung der ersten Abschnitte 62 gleiten die Rastabschnitte 64 dann über den Außenumfang des Gehäuses 12. Aufgrund der Vorspannkraft, die aus der elastischen Verformung der ersten Abschnitte 62 resultiert, verrasten die Rastabschnitte 64 selbsttätig in der Rastnut 66, sobald das Teil 44 seine vorbestimmte Position erreicht hat, und fixieren es in dieser Stellung. Da im wesentlichen die axial gerichteten ersten Abschnitte 62 und nicht die Rastabschnitte 64 die elastische Verformung erfahren, werden die Rastabschnitte 64 kaum verkantet und können präzise und zuverlässig in die Rastnut 66 einrasten. Die zu der Abschrägung 68 der Rastabschnitte 64 komplementäre Abschrägung 70 der Rastnut 66 bewirkt eine sichere Fixierung der Rastabschnitte 64 in der Rastnut 66.

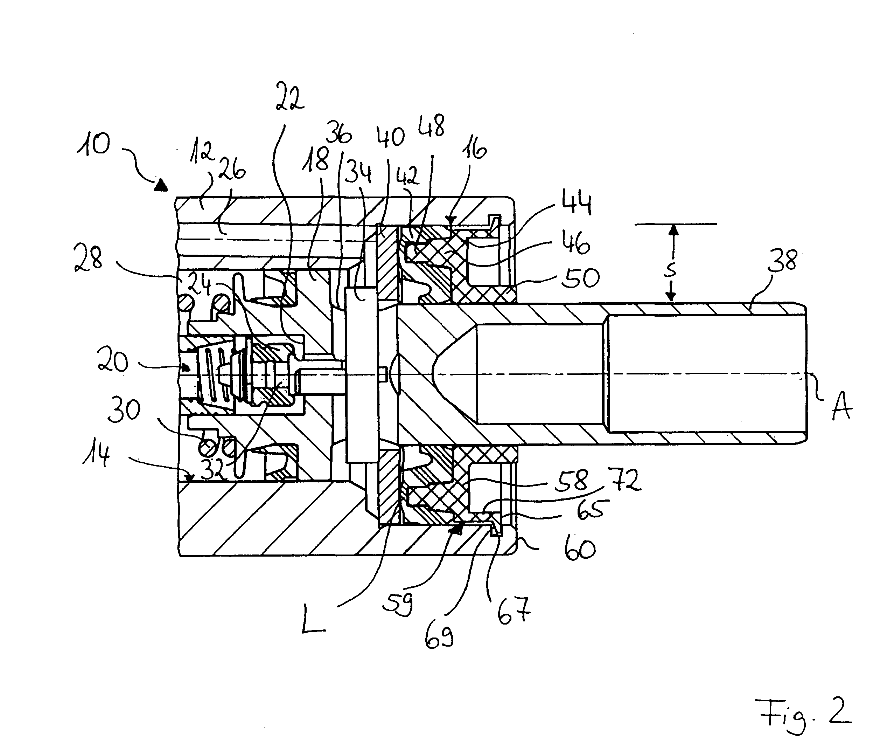

Bei dem in Fig. 2 dargestellten Ausführungsbeispiel der Erfindung ist das Teil 44 des Verschlußelements 16 im eingebauten Zustand vollständig im Inneren der Bohrung 14 angeordnet. Das Teil 44 weist einstückig an die kreisringförmige Basis 58 angeformte Rastarme 59 auf. Ein erster Abschnitt der Rastarme 59, der sich in axialer und von der Bohrung 14 abgewandter Richtung im Inneren der Bohrung erstreckt, wird von einem hohlzylindrischen Wandabschnitt 72 gebildet, der einstückig mit der Basis 58 verbunden ist. Die Außendurchmesser der Basis 58 und des hohlzylindrischen Wandabschnitts 72 sind jeweils kleiner als der Innendurchmesser der Bohrung 14. Von dem hohlzylindrischen Wandabschnitt 72 ragen Rastabschnitte 65 radial nach außen und wirken mit einer Rastnut 67 zusammen, die am Innenumfang der Bohrung 14 ausgebildet ist. Die Rastabschnitte 65 weisen auf ihrer der Bohrung 14 zugewandten Seite Abschrägungen 69 auf.

Bei der Montage wird das Bauteil 44 in die Bohrung 14 eingeführt, wobei die Abschrägungen 69 der Rastabschnitte 65 mit der Stirnfläche 60 der Gehäusewand 12 so zusammenwirken, daß der hohlzylindrische Wandabschnitt 72 in radialer Richtung zunehmend elastisch nach innen verformt wird. Bei einer entsprechenden Verformung des hohlzylindrischen Wandabschnitts 72 gleiten dann die Rastabschnitte 65 über den Innenumfang der Bohrung 14. Infolge der aus dieser elastischen Verformung resultierenden Rückstellkräfte verrasten die Rastabschnitte 65 der Rastarme 59 automatisch in der Rastnut 67, sobald das Bauteil 44 seine vorbestimmte Position erreicht hat. Da im wesentlichen der hohlzylindrische Wandabschnitt 72 und nicht die Rastabschnitte 65 die elastische Verformung erfahren, verkanten die Rastabschnitte 65 nur wenig und können präzise und zuverlässig in die Rastnut 67 einrasten.

Gemäß einer weiteren, in der Figur 2 nicht gezeigten Ausführungsform weist auch die Rastnut 67 auf ihrer der Bohrung 14 zugewandten Seite Abschrägungen auf. Diese zur Abschrägung 69 der Rastabschnitte 65 komplementäre Abschrägung der Rastnut 67 bewirkt eine sichere Fixierung der Rastabschnitte 65 in der Rastnut 67.

Gemäß einer noch weiteren in den Figuren nicht gezeigten Ausführungsform sind die Rastarme 57 an dem hohlzylindrischen Fortsatz 50 des Teils 44 angeformt. Die Rastarme 57 weisen einen radial von dem hohlzylindrischen Fortsatz 50 nach außen ragenden ersten Abschnitt, einen sich in axialer und der Bohrung 14 zugewandter Richtung entlang des Außenumfangs des Gehäuses 12 erstreckenden zweiten Abschnitt 62 und einen von dem zweiten Abschnitt 62 radial nach innen ragenden Rastabschnitt 64 auf. Der Rastabschnitt 64 wirkt mit einer am Außenumfang des Gehäuses 12 ausgebildeten Rastnut 66 zusammen.

Bei einem noch anderen Ausführungsbeispiel (nicht dargestellt) sind die Rastarme 59 ebenfalls an dem hohlzylindrischen Fortsatz 50 des Teils 44 angeformt. Die Rastarme 59 weisen einen radial von dem hohlzylindrischen Fortsatz 50 nach außen ragenden ersten Abschnitt, einen sich in axialer und von der Bohrung 14 abgewandter Richtung im Inneren der Bohrung 14 erstreckenden zweiten Abschnitt und einen von dem zweiten Abschnitt radial nach außen ragenden Rastabschnitt 65 auf. Der Rastabschnitt 65 wirkt mit einer am Innenumfang der Bohrung 14 ausgebildeten Rastnut 67 zusammen.

## Patentansprüche

1. Hauptzylinder (10) für eine hydraulische Fahrzeugbremsanlage mit
- einem Gehäuse (12), das eine sich entlang einer Längsachse (A) erstreckende Bohrung (14) aufweist, deren eines Ende von einer zum Gehäuse (12) des Hauptzylinders (10) gehörenden Stirnwand und deren anderes, gegenüberliegendes Ende durch ein Verschlusselement (16) abdichtend verschlossen ist,
- einem in der Bohrung (14) geführten Kolben (18), der abdichtend und axial verschiebbar durch das Verschlusselement (16) hindurchgeführt ist, und
- einem am Kolben (18) ausgebildeten Zentralventil (20), das eine Fluidverbindung zwischen einem Fluidreservoir und einer in der Bohrung (14) durch die Stirnwand und den Kolben (18) begrenzten Druckkammer (28) ermöglicht, und das bei unbetätigtem Kolben (18) durch ein an einem Anschlagelement (40) anliegendes Anlagebauteil (34) in Offenstellung gehalten ist, wobei das Verschlusselement (16) aus zwei lösbar miteinander verbundenen, kreisringförmigen, sich axial aneinander anschließenden Teilen (42, 44) gebildet ist, von denen das erste, der Bohrung (14) zugewandte Teil (42) aus einem Elastomermaterial und das zweite, von der Bohrung (14) abgewandte Teil (44) aus einem starren Material besteht, und wobei das von der Bohrung (14) abgewandte Teil (44) des Verschlusselements (16) mindestens zwei federnd nachgiebige Rastarme (59) aufweist, die mit einer am Innenumfang der Bohrung (14) ausgebildeten Rastnut (67) zusammenwirken,
**dadurch gekennzeichnet, dass** jeder Rastarm (59) im Inneren der Bohrung (14) einen sich in axialer und von der Bohrung (14) abgewandter Richtung erstreckenden ersten Abschnitt und einen von dem ersten Abschnitt radial nach außen ragenden Rastabschnitt (65) aufweist, wobei sich der Rastabschnitt (65) im Wesentlichen senkrecht zu dem ersten Abschnitt erstreckt, und wobei das Anschlagelement (40) mit einer Stirnfläche des aus einem Elastomermaterial bestehenden Teils (42) des Verschtusselements (16) in Berührung steht.

2. Hauptzylinder nach Anspruch 1,
**dadurch gekennzeichnet, dass** die Rastarme (59) einstückig mit dem von der Bohrung (14) abgewandten Teil (44) ausgebildet sind.

3. Hauptzylinder nach einem der Ansprüche 1 oder 2,
**dadurch gekennzeichnet, dass** der erste Abschnitt aller Rastarme (59) von einem hohlzylindrischen Wandabschnitt (72) gebildet ist, der sich von einer Basis (58) des von der Bohrung (14) abgewandten Teils (44) aus starrem Material in axialer und von der Bohrung (14) abgewandter Richtung erstreckt.

4. Hauptzylinder nach einem der Ansprüche 1 oder 2,
**dadurch gekennzeichnet, dass** die Rastarme (59) an einen hohlzylindrischen Fortsatz (50) des Teils (44) aus starrem Material angeformt sind, der auf einem Betätigungsfortsatz (38) des Kolbens (18) geführt ist.

## Claims

1. A master cylinder (10) for a vehicle hydraulic brake system, comprising
- a housing (12) having a bore (14) which extends along a longitudinal axis (A) and which is sealingly closed at one end by an end wall forming part of the housing (12) of the master cylinder (10) and at the other, opposite end by a closure element (16),
- a piston (18) which is guided in the bore (14) and extends in a sealing and axially displaceable manner through the closure element (16), and
- a central valve (20), which is formed on the piston (18) and enables a fluid connection between a fluid reservoir and a pressure chamber (28) delimited in the bore (14) by the end wall and the piston (18) and which in the non-actuated state of the piston (18) is held in open position by an abutment component (34) abutting a stop element (40), wherein the closure element (16) is formed by two annular, axially mutually adjoining parts (42, 44), which are releasably connected to one another and of which the first part (42) facing the bore (14) is made of an elastomer material and the second part (44) remote from the bore (14) is made of a rigid material, and wherein the part (44) of the closure element (16) remote from the bore (14) has at least two compliant detent arms (59), which interact with a detent groove (67) formed in the inner periphery of the bore (14),
**characterized in that** each detent arm (59) in the interior of the bore (14) comprises a first portion which extends in axial direction and away from the bore (14), and a detent portion (65) which projects radially outwards from the first portion, wherein the detent portion (65) extends substantially at right angles to the first portion, and wherein the stop element (40) is in contact with an end face of the part (42) of the closure element (16) made of an elastomer material.

2. The master cylinder according to claim 1,
**characterized in that** the detent arms (59) are formed integrally with the part (44) remote from the bore (14).

3. The master cylinder according to one of claims 1 or 2,
**characterized in that** the first portion of all detent arms (59) is formed by a hollow-cylindrical wall portion (72) which extends from a base (58) of the part (44) made of rigid material remote from the bore (14) in axial direction and away from the bore (14).

4. The master cylinder according to one of claims 1 or 2,
**characterized in that** the detent arms (59) are formed on a hollow-cylindrical extension (50) of the part (44) made of rigid material, which extension (50) is guided on an actuating extension (38) of the piston (18).

## Revendications

1. Maître-cylindre (10) pour une installation de freinage hydraulique pour véhicule, avec
- un boîtier (12), qui présente un alésage (14) s'étendant le long d'un axe longitudinal (A), alésage dont une extrémité est fermée par une paroi frontale appartenant au boîtier (12) du maître-cylindre (10) et dont l'autre extrémité, opposée, est fermée de façon étanche par un élément de fermeture (16),
- un piston (18) guidé dans l'alésage (14), qui est conduit de façon coulissante axialement et de manière étanche à travers l'élément de fermeture (16), et
- une soupape centrale (20) formée sur le piston (18), qui permet une communication de fluide entre un réservoir de fluide et une chambre de pression (28) délimitée dans l'alésage (14) par la paroi frontale et le piston (18), et qui est maintenue en position ouverte par une pièce structurelle d'appui (34) appliquée sur un élément de butée (40) lorsque le piston (18) n'est pas actionné, l'élément de fermeture (16) étant formé par deux pièces (42, 44) reliées l'une à l'autre de façon détachable, en forme d'anneau circulaire et se raccordant axialement l'une à l'autre, dont la première pièce (42) tournée vers l'alésage (14) se compose d'un matériau élastomère et la deuxième pièce (44) située à l'opposé de l'alésage (14) se compose d'une matière rigide, et la pièce (44) de l'élément de fermeture (16) située à l'opposé de l'alésage (14) présentant au moins deux bras d'encliquetage (59) déformables élastiquement qui coopèrent avec une rainure d'encliquetage (67) pratiquée sur la périphérie intérieure de l'alésage (14),
**caractérisé en ce que** chaque bras d'encliquetage (59) présente à l'intérieur de l'alésage (14) une première partie s'étendant en direction axiale et dans le sens opposé à l'alésage (14) et une partie d'encliquetage (65) faisant saillie radialement vers l'extérieur à partir de la première partie, la partie d'encliquetage (65) s'étendant sensiblement perpendiculairement à la première partie, et l'élément de butée (40) étant en contact avec une face frontale de la pièce (42) de l'élément de fermeture (16) composée en matériau élastomère.

2. Maître-cylindre selon la revendication 1, **caractérisé en ce que** les bras d'encliquetage (59) sont formés d'un seul tenant avec la pièce (44) située à l'opposé de l'alésage (14).

3. Maître-cylindre selon l'une des revendications 1 ou 2, **caractérisé en ce que** la première partie de tous les bras d'encliquetage (59) est formée par une partie de paroi cylindrique creuse (72), qui s'étend d'une base (58) de la pièce (44) en matière rigide située à l'opposé de l'alésage (14), dans une direction axiale et dans le sens opposé à l'alésage (14).

4. Maître-cylindre selon l'une des revendications 1 ou 2, **caractérisé en ce que** les bras d'encliquetage (59) sont formés sur un prolongement cylindrique creux (50) de la pièce (44) en matière rigide, qui est guidé sur un prolongement d'actionnement (38) du piston (18).
